# EUROPÄISCHE PATENTSCHRIFT

(11) **EP 3 146 227 B1**
(45) Veröffentlichungstag und Bekanntmachung des Hinweises auf die Patenterteilung: **30.01.2019**
(21) Anmeldenummer: 15722536.8
(22) Anmeldetag: 15.05.2015
(51) Int. Cl.: F16D 51/00, F16D 65/09, F16D 65/28

(54) **BREMSSYSTEM**
BRAKE SYSTEM
SYSTÈME DE FREINAGE

(30) Priorität: 23.05.2014 DE 102014209909
(43) Veröffentlichungstag der Anmeldung: 29.03.2017
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2015/060764
(87) Internationale Veröffentlichungsnummer: WO 2015/177053

(56) Entgegenhaltungen:
- WO-A1-2014/069663
- DE-A1- 2 314 581
- DE-A1- 2 730 959
- FR-A5- 2 176 444
- JP-A- 2003 156 087

## Beschreibung

Die vorliegende Erfindung betrifft ein Bremssystem vorzugsweise zum Einsatz bei einem Nutzfahrzeug oder einem Nutzfahrzeuganhänger.

Bremssysteme sind aus dem Stand der Technik bereits hinlänglich bekannt. So werden im Nutzfahrzeugbereich zumeist druckluftbasierte Bremssysteme eingesetzt, bei denen ein Druckluftzylinder eine pneumatische Druckkraft in eine Bewegung eines Eingriffselements wandelt, welche wiederum an die Bremsmittel der Bremse, beispielsweise Bremsbacken oder Bremsschuhe, übertragen wird, um einen Reibkontakt einzuleiten und eine Bremsung des Nutzfahrzeuges zu erreichen. Es sind hierbei Membranzylinder als Druckluftzylinder verbreitet, wobei diese über entsprechende Flanschgeometrien an dem Bremssystem festgelegt werden. Insbesondere im Bereich der Trommelbremsen ist es üblich Spezialdruckluftzylinder einzusetzen, welche die erforderlichen Stellwege für Trommelbremsen erreichen. Solche Spezialdruckluftzylinder weisen aber ein hohes Gewicht und einen sehr hohen Bauraumbedarf auf. Weiterhin ist es erforderlich, die wesentlichen Komponenten eines Bremssystems gegen Beschädigung durch während der Fahrt des Nutzfahrzeuges aufgewirbelte Teile, wie beispielsweise Steine, zu schützen. Derartige Abschirmgeometrien müssen bis dato sehr großvolumig ausgelegt sein, da die aus dem Stand der Technik bekannten Bremssysteme wiederum einen hohen Bauraumbedarf aufweisen. Zudem hat das hohe Gewicht der aus dem Stand der Technik bekannten Bremssysteme nachteilige Auswirkungen auf die Beständigkeit des Bremssystems gegenüber Schwingungen, die beispielsweise während der Fahrt oder während einer Bremsung auftreten.

DE 2 314 581 offenbart eine Nachstellvorrichtung für eine Bremsanlage mit einem Drehkörper, einem mit dem Drehkörper in Eingriff bringbaren Bremselement und einem nicht drehbaren Druckstück, das in einem Gehäuse verschiebbar ist, so dass es mit dem Drehkörper im Bremseingriff bringbar ist.

FR 2 176 444 A5 offenbart ein Bremssystem mit einem mehrteiligen Gehäuse.

DE 27 30 959 A1 betrifft eine Scheibenbremse mit einem Bremszylinder, wobei ein mehrstückiges Gehäuse vorgesehen ist.

WO 2014/069663 A1 betrifft eine Bremskammer mit einem ersten Gehäuse, einem zweiten Gehäuse und einem Verbindungsgehäuse.

JP 2003-156087 A zeigt ein Bremssystem, bei welchem ein Betriebsbremsteil und ein Feststellbremsteil in einem gemeinsamen Gehäuse integriert sind.

Aufgabe der vorliegenden Erfindung ist es, ein Bremssystem bereitzustellen, welches zum einen einen geringeren Bauraumbedarf aufweist als die aus dem Stand der Technik bekannten Bremssysteme und zum anderen ein geringeres Gewicht als die aus dem Stand der Technik bekannten Bremssysteme aufweist.

Diese Aufgabe wird gelöst durch ein Bremssystem gemäß Anspruch 1. Weitere Vorteile und Merkmale der vorliegenden Erfindung ergeben sich aus den abhängigen Ansprüchen.

Erfindungsgemäß umfasst das Bremssystem einen Betätigungsteil und einen Bremsteil, wobei der Betätigungsteil eine Druckkammer und einen Rückstellabschnitt aufweist, wobei die Druckkammer und der Rückstellabschnitt durch einen Kolben fluiddicht voneinander getrennt sind, wobei der Kolben an einem Eingriffselement derart festlegbar beziehungsweise festgelegt ist, dass eine Verlagerung des Kolbens eine Verlagerung des Eingriffselements bewirkt, wobei das Eingriffselement in den Bremsteil hineinragt und im Bremsteil einen Kraftabschnitt aufweist, welcher ausgelegt ist eine, Kraft auf ein Bremsmittel zu übertragen, wobei der Bremsteil und der überwiegende Teil des Betätigungsteils in einem Gehäuse angeordnet sind. Der Betätigungsteil des Bremssystems ist vorzugsweise der Teil in dem eine Druckkraft beispielsweise durch einen Luftdruck verursacht, in eine axiale Bewegung eines antreibenden Elements, wie beispielsweise eines Kolbens gewandelt wird. Der Bremsteil ist vorzugsweise der Teil des Bremssystems, in dem die Bewegung beziehungsweise die Verlagerung des Kolbens mittelbar oder unmittelbar in einer Verlagerung von Bremsmitteln, wie beispielsweise einer Bremsbacke oder eines Bremsschuhs einer Scheibenbremse, gewandelt wird. Dabei weist der Betätigungsteil eine Druckkammer auf, welche insbesondere dazu dient, ein unter einem bestimmten Betriebsdruck stehendes Fluid zu speichern und einen Kolben, welcher durch das unter Druck stehende Fluid angetrieben wird, aufzunehmen. Weiterhin ist ein Eingriffselement vorgesehen, welches an dem Kolben festlegbar beziehungsweise bevorzugt am Kolben festgelegt ist. Insbesondere bevorzugt ist hierbei eine formschlüssige Verbindung des Kolbens mit dem Eingriffselement beispielsweise durch ein Gewinde. In einer alternativ bevorzugten Ausführungsform ist der Kolben einstückig mit dem Eingriffselement ausgeführt. Das Eingriffselement ist vorzugsweise ein stangenförmig ausgebildeter Körper und überträgt eine Kraft beziehungsweise eine Verlagerung des Kolbens in den Bremsteil des Bremssystems. Weiterhin weist das Eingriffselement in seinem in den Bremsteil hineinragenden Abschnitt einen Kraftabschnitt auf, welcher ausgelegt ist, eine Kraft auf ein Bremsmittel, vorzugsweise eine Bremsbacke oder ein Bremsschuh beziehungsweise ein Bremssattel, zu übertragen. Besonders bevorzugt ist das Eingriffselement eine Antriebsstange für eine Spreizkeileinheit und der Kraftabschnitt die entsprechende Keilgeometrie, welche direkt oder indirekt mit einer oder mehreren auseinander zu pressenden Bremsbacken in Eingriff steht. Der Bremsteil und der überwiegende Teil des Betätigungsteils sind in einem Gehäuse angeordnet. Das Gehäuse ist ein bereichsweise hohlkörperförmig ausgebildeter Körper und dient zur Aufnahme des Bremsteils und eines überwiegenden Teils des Betätigungsteils. Überwiegend bedeutet in diesem Zusammenhang, dass die wesentlichen Komponenten des Betätigungsteils wie Rückstellabschnitt und zumindest die Hälfte der Druckkammer in dem Gehäuse aufgenommen sind. Mit anderen Worten ist das Bremssystem also durch ein Gehäuse gekennzeichnet, welches in integraler Weise den Bremsteil, welcher beispielsweise als Spreizkeileinheit einer Trommelbremse ausgelegt sein kann und einen überwiegenden Teil des Betätigungsteils, welcher mit anderen Worten der Bremszylinder einer Fahrzeugbremse ist, aufnimmt. Diese überwiegende Integration des Bremsteils und des Betätigungsteils in das Gehäuse führt zu einer besonders kompakten Bauweise des Bremssystems und reduziert in bevorzugter Weise das Gewicht des Bremssystems im Vergleich zu aus dem Stand der Technik bekannten Bremssystemen.

Vorzugsweise ist das Eingriffselement entlang einer Betätigungsachse um einen maximalen Betätigungsweg verlagerbar, wobei der maximale Betätigungsweg zu der Gesamterstreckung des Bremssystems längs der Betätigungsachse in einem Verhältnis von 0,05 bis 0,6, vorzugsweise von 0,06 bis 0,3 und besonders bevorzugt von 0,075 bis 0,13 steht. Es kann als Ausdruck für die Kompaktheit der Auslegung des Bremssystems gewertet werden, wenn zur Erreichung eines bestimmten Betätigungsweges des Eingriffselements das Bremssystem insgesamt nur eine relativ geringe Baulänge benötigt. Insbesondere um die hohen Anforderungen an den geringen Bauraumbedarf zu befriedigen, ist es bevorzugt, dass das Verhältnis zwischen maximalem Betätigungsweg des Eingriffselements und der Gesamterstreckung des Bremssystems längs der Betätigungsachse, innerhalb eines Verhältnisses von 0,05 bis 0,6 liegt. Der obere Wert dieses Verhältnisses 0,6 bedeutet dabei insbesondere, dass der Betätigungsweg des Eingriffselements etwas mehr als die Hälfte der Gesamtbaulänge des Bremssystems umfasst. Dieser Wert ist selbstverständlich nur dann möglich, wenn die vom Eingriffselement zu übertragende Kraft relativ gering ist. Es versteht sich, dass, wenn das Eingriffselement eine höhere Kraft aufbringen muss, um das Bremsmittel des Nutzfahrzeuges zu betätigen, die entsprechenden Geometrien des Betätigungsteils, des Bremssystems und des Bremsteils größer ausgelegt sein müssen um diese höheren Kräfte aufnehmen und übertragen zu können. Versuche der Anmelderin haben gezeigt, dass mit einem Verhältnisbereich von 0,05 bis 0,6 die größte Bandbreite von Anforderungen an das Bremssystem erfüllt werden kann. Der besonders bevorzugte Bereich von 0,06 bis 0,3 ist dabei der insbesondere für eine Spreizkeileinheit bevorzugte Verhältnisbereich, bei welchem ein besonders günstiger Kompromiss aus dem erforderlichen maximalen Betätigungsweg und einer trotzdem relativ geringen Gesamterstreckung des Bremssystems erzielt werden kann. Der insbesondere bevorzugte Bereich von 0,075 bis 0,13 wurde dabei im Rahmen der vorliegenden Erfindung als der Bereich festgestellt, bei welchem das Bremssystem, auch wenn es weitere Hilfsteile, wie beispielsweise einen Feststellteil umfasst, den besten Kompromiss zwischen dem maximalen Betätigungsweg bei einer gleichzeitig so gering wie möglichen Gesamterstreckung des Bremssystems längs der Betätigungsachse bietet. Mit Vorteil steht der maximale Betätigungsweg in einem Verhältnis von 0,28 bis 0,8, vorzugsweise 0,4 bis 0,7 und besonders bevorzugt von ca. 0,6 zur Erstreckung des Betätigungsteils längs der Betätigungsachse. Die Kompaktheit des Betätigungsteils selbst kann gesteigert werden, wenn dieser derart ausgelegt ist, dass zur Erreichung eines bestimmten maximalen Betätigungsweges, die Länge des Betätigungsteils in den hier vorgeschlagenen Grenzen gehalten wird. Der Minimalwert des Verhältnisses von 0,28 ist daher nur dann bevorzugt, wenn die Anforderungen an die Festigkeit und Betriebssicherheit derart hoch sind, dass eine Kompakte Bauweise nachrangig ist. Die größte Kompaktheit wird mit einem Verhältnis von 0,8 erreicht. Der bevorzugte Verhältnisbereich von 0,4 bis 0,7 erlaubt hohe Lebensdauererwartungen bei einer ausreichenden Kompaktheit. Überraschenderweise zeigte ein Verhältnis von 0,6 eine Optimierung des Kompromisses zwischen Gewicht, kompakter Bauweise und Festigkeit insbesondere für den Einsatz in Nutzfahrzeugen mit einem zulässigen Gesamtgewicht größer 20 t.

In einer bevorzugten Ausführungsform ist der Betätigungsteil für einen maximalen Betriebsdruck in der Druckkammer von mindestens 15 bar, vorzugsweise von zumindest 17 bar ausgelegt. Das Bremssystem weist zur Erreichung dieser Anforderung vorzugsweise Hochdruckdichtungen im Bereich des Kolbens auf. Weiterhin weist das Gehäuse in dem Bereich, in welchem es mit einem Deckel oder mit einem angrenzenden System verschließbar ist, vorzugsweise weitere Hochdruckdichtungen und/oder beispielsweise selbstdichtende Isogewinde auf. Ebenfalls sind die entsprechenden Wandstärken des Betätigungsteils und insbesondere des Gehäuses im Bereich der Druckkammer für diese Drücke von zumindest 15 bar ausgelegt.

Mit Vorteil ist das Bremssystem für einen Druckbereich von 6 - 20 bar, vorzugsweise 10 - 18 bar und besonders bevorzugt von ca. 15 - 18 bar ausgelegt. Der Druckbereich von 6 - 20 bar wurde im Rahmen der vorliegenden Erfindung als ausreichend zur Erreichung einer Gewichts- und Bauraumoptimierung durch Verkleinerung der Querschnitte der des Gehäuses ermittelt. Hierbei konnten für alle gängigen Nutzfahrzeuge die erforderlichen Bremskräfte durch ein erfindungsgemäßes Bremssystem aufgebracht werden. Der Bereich von 10 - 18 bar hat sich unter den zuvor beschriebenen Vorteilen insbesondere für leichtere Nutzfahrzeuge, wie kleinere Lastkraftwagen und Omnibusse als optimaler Druckbereich erwiesen. Für schwere Nutzfahrzeuge mit entsprechend hohen Trommelbremsdurchmessern hat es sich als besonders vorteilhaft erwiesen, einen Druckbereich von 15 - 18 bar zu verwenden, da das Bremssystem mit diesen Drücken stets die erforderliche Bremskraft aufzubringen in der Lage ist.

Besonders bevorzugt ist das Gehäuse zylindrisch ausgebildet und weist einen mittleren Durchmesser auf, wobei das Gehäuse im Bereich der Druckkammer eine minimale Wandstärke aufweist, wobei die minimale Wandstärke zum mittleren Durchmesser in einem Verhältnis von 0,01 bis 0,2, vorzugsweise von 0,03 bis 0,1 und besonders bevorzugt von circa 0,06 bis 0,1 steht. Um die bevorzugt besonders hohen Drücke in der Druckkammer von besonders bevorzugt über 17 bar aushalten zu können, weist das Gehäuse des Bremssystems vorzugsweise eine minimale Wandstärke auf, die zum mittleren Durchmesser des Gehäuses in einem Verhältnis von 0,01 bis 0,2 steht. Es hat sich hierbei gezeigt, dass der größtmögliche Verhältnisbereich von 0,01 bis 0,2 ausreichend ist, um sämtliche, im Rahmen der vorliegenden Erfindung vorgesehenen Drücke aushalten zu können und dabei noch einen ausreichenden Sicherheitsfaktor zu gewährleisten. Der bevorzugte Verhältnisbereich von 0,03 bis 0,1 hat sich dabei, insbesondere mit Blick auf Nutzfahrzeugbremsen, in den Bremssysteme mit einem vorzugsweise aus Stahl gefertigten Gehäuse zur Anwendung kommen, bewährt. Es hat sich gezeigt, dass in dem bevorzugten Verhältnisbereich von 0,03 bis 0,1 besonders gute Gewichtseinsparungen bei gleichzeitig ausreichend hohen Sicherheitsfaktoren möglich sind. Der besonders bevorzugte Bereich von 0,06 bis 0,1 hat sich insbesondere bei Bremssystemen, welche auch in Personenkraftfahrzeugen zum Einsatz kommen können, bewährt, da er einerseits eine ausreichend hohe Sicherheit gegen Ausfall beispielsweise durch Überschreitung des maximal durch die Gehäusewand auszuhaltenden Druckes, und andererseits einer besonders effizienten Bauraumreduzierung bietet, da bei einer Wandstärke der Gehäusewand, die im Bereich von 0,06 bis 0,1 des mittleren Durchmessers des Gehäuses beträgt, vorzugsweise besonders hohe Drücke im Bremssystem angewendet werden können. Durch diese hohen Drücke erhöht sich auch die vom Bremssystem aufbringbare Kraft und es kann daher ein Bremssystem beziehungsweise ein Gehäuse mit einer geringeren Erstreckung quer zur Betätigungsachse gewählt werden, welches wiederum einen geringen Bauraumbedarf und ein geringeres Gewicht aufweist. Als mittlerer Durchmesser ist vorzugsweise der Mittelwert zwischen dem Durchmesser der äußeren Fläche beziehungsweise äußeren Wand des Gehäuses und der inneren Wand des Gehäuses sowie auch das arithmetische Mittel von verschiedenen mittleren Durchmessern, welche entlang der Betätigungsachse aneinander gefädelt sind, definiert. Mit anderen Worten ist das Gehäuse zwar im Wesentlichen zylindrisch ausgebildet, es können aber - insbesondere durch lokale Verstärkungen, Materialverdickungen oder Flansche zum Anbringen des Gehäuses an einer Fahrwerkstruktur oder Anbringen weiterer Elemente an dem Gehäuse - lokal verschiedene, mittlere Durchmesser vorliegen. Es kann somit lokal eine Abweichung von der zylindrischen Form des Gehäuses auch im Rahmen der vorliegenden Erfindung vorgesehen sein.

Erfindungsgemäß ist das Gehäuse einstückig ausgebildet, wobei das Gehäuse im Bereich des Bremsteils als Spreizkeileinheit ausgebildet ist. Insbesondere bevorzugt ist es dabei, dass das Gehäuse im Bereich des Bremsteils, also vorzugsweise in dem Bereich, in dem das Eingriffselement einen Kraftabschnitt aufweist, als herkömmliche Spreizkeileinheit ausgebildet ist. Auf diese Weise lässt sich das erfindungsgemäße Bremssystem in bereits im Einsatz befindliche Bremsen, beispielsweise für Trommelbremsen eines Nutzfahrzeuges, einsetzen ohne an der weiteren Kraftübertragungskette beziehungsweise dem Kraftübertragungssystem der vorhandenen Bremsanordnung Veränderungen vornehmen zu müssen. Spreizkeileinheiten an sich können dabei als aus dem Stand der Technik bekannt vorausgesetzt werden. Mit Vorteil schafft es die vorliegende Erfindung dabei, dass das Gehäuse zum einen eine herkömmliche Spreizkeileinheit umschließt und zum anderen einstückig mit weiteren Teilen, wie dem Betätigungsteil des Bremssystems, ausgebildet ist, so dass mit anderen Worten ein bisher separat am Bremssystem anzubringender Bremszylinder nunmehr im Rahmen der vorliegenden Erfindung teilweise in das Gehäuse der Spreizkeileinheit integriert werden kann. Auf diese Weise lässt sich nicht nur Bauraum sparen, sondern es ist auch eine Vereinfachung der Montage erreichbar, da weniger separat voneinander vorgesehene Teile zusammengebaut werden müssen. Weiterhin sinkt durch die Integration des Betätigungsteils in das Gehäuse, in dem sich auch die Spreizkeileinheit befindet, die Fehleranfälligkeit des Bremssystems, da weniger Schnittstellen wie Flansche und weitere zu Leckagen oder Beschädigungen neigende Verbindungsbereiche zwischen verschiedenen Systemen des Bremssystems vorgesehen sind. Insbesondere bevorzugt ist das Gehäuse dabei als einstückiges Gußteil ausgebildet. Alternativ bevorzugt kann auch ein aus einem Faserverbundwerkstoff aufgebautes Gehäuse vorgesehen sein, welches insbesondere Vorteile bezüglich der Zugfestigkeit in bestimmten Richtungen wie beispielsweise in Umfangrichtung aufweist, um den im Bremssystem bevorzugt vorgesehenen hohen Drücken noch besser standhalten zu können, als dies beispielsweise ein Gußteil kann. Hierbei kann insbesondere ein aus Flechtmaterial oder ein gewebtes Faserverbundgerüst eingesetzt werden, welches das Gehäuse lokal oder vollständig gegen Zugspannungen in vorzugsweise der Umfangsrichtung verstärkt. Weiterhin ist es bevorzugt, dass das Gehäuse aus GLARE, einem faserverstärken Aluminiumgusswerkstoff herstellt ist. GLARE verbindet dabei zum einen die leichte Bauweise von Aluminium mit der hohen Zugfestigkeit der in das Aluminium eingegossenen Aramid- oder Kohlefasern, welche die Zugfestigkeit in den jeweils gewünschten Richtungen drastisch erhöhen. Zur Berechnung der in Umfangs- und Axialrichtung auftretenden Kräfte in der Gehäusewand kann insbesondere bevorzugt die nach DIN definierte Kessel-Formel angewendet werden.

In einer besonders bevorzugten Ausführungsform sind das Eingriffs- bzw. Betätigungselement und der Kolben vollständig innerhalb des Gehäuses angeordnet. Dies betrifft insbesondere bevorzugt sämtliche Betriebszustände des Bremssystems, also auch jenen Betriebszustand, in dem der Kolben seine maximale Entfernung von dem Bremsteil des Bremssystems aufweist. Mit Vorteil weist das Gehäuse an seiner dem Bremsteil abgewandten Seite einen Anschlag für den Kolben auf, welcher besonders bevorzugt nach Einschieben des Eingriffs- bzw. Betätigungselements und des Kolbens in das Gehäuse einbringbar, beispielsweise durch Schrauben oder Anschweißen, ist. Der Vorteil der vollständigen Anordnung des Eingriffs- bzw. Betätigungselements und des Kolbens innerhalb des Gehäuses liegt darin, dass das somit annähernd vollständige Bremssystem als ein Teil an das Nutzfahrzeugfahrwerk angebaut werden kann und von diesem demontiert werden kann und somit die Montage stark vereinfacht ist. Dieser Effekt lässt sich noch steigern, indem auch die Druckkammer bevorzugt vollständig innerhalb des Gehäuses angeordnet ist, wobei das Gehäuse mit einem als Deckelelement wirkenden Bauteil, wie beispielsweise einem Deckel, verschlossen ist. Die einstückige Ausbildung des Gehäuses ist dabei besonders geeignet die in der Druckkammer und im Bereich des Kolbens wirkenden hohen Kräfte zu übertragen, da keine anfälligen Schnittstellen zwischen einzelnen Bereichen des Betätigungsteils oder des Bremsteils vorgesehen sind.

Mit Vorteil weist das Gehäuse einen Fluidstutzen auf, welcher an der Außenseite des Gehäuses zum Anschluss einer Druckleitung ausgelegt ist und an der Innenseite des Gehäuses in die Druckkammer mündet. Mit Vorteil einstückig mit dem Gehäuse ausgebildet ist der Anschluss für die Druckleitung, mit welchem das Bremssystem mit dem nötigen Betriebsdruck beaufschlagt wird. Dabei ist es vorteilhaft, dass der Fluidstutzen einstückig an das Gehäuse angeformt ist, beispielsweise durch Angießen beziehungsweise gleichzeitig mit dem Gehäuse hergestellt ist. Insbesondere durch eine bevorzugte abgerundete Ausgestaltung des Übergangs der Wand des Fluidstutzens in die Wand des Gehäuses kann die Kerbwirkung im Bereich des Fluidstutzens deutlich reduziert werden.

Weiterhin bevorzugt weist das Gehäuse einen Flanschabschnitt auf, welcher zur Festlegung des Gehäuses an einem Fahrwerkselement eines Nutzfahrzeugs aufgelegt ist. Es ist besonders bevorzugt, dass das Gehäuse möglichst viele Funktionen des Bremssystems erfüllen kann, so auch die bevorzugte Festlegung des Bremssystems an dem Fahrwerk des Nutzfahrzeuges. Hierzu weist das Gehäuse vorzugsweise einen einstückig mit dem Gehäuse ausgebildeten Flanschabschnitt auf, welcher beispielsweise durch eine Schraub- oder Bolzenverbindung an dem Bremsträger eines Nutzfahrzeuges festlegbar ist. Auf diese Weise lässt sich die Festigkeit der Verbindung zwischen Gehäuse, Flanschabschnitt und dem Fahrwerk des Nutzfahrzeuges erhöhen. Insbesondere bevorzugt kann es dabei sein, dass das Gehäuse einstückig mit dem Bremsträger ausgebildet ist, wobei die Festigkeit der Verbindung und die Vereinfachung der Montage weiter gesteigert werden kann.

Mit Vorteil ist im Rückstellabschnitt ein erstes Rückstellelement angeordnet, welches eine Kraft entlang einer Betätigungsachse in Richtung der Druckkammer auf den Kolben ausübt. Es hat sich dabei als vorteilhaft erwiesen, dass auch das Rückstellelement im Rückstellabschnitt innerhalb des einstückig ausgebildeten Gehäuses angeordnet ist, wodurch wiederum eine Bauraum- und Gewichtseinsparung erzielt werden kann. Das erste Rückstellelement stützt sich dabei mit Vorteil an einer dafür vorgesehenen Geometrie des Gehäuses oder an einem im Gehäuse angeordneten Element ab und entfaltet eine Kraft, welche auf den Kolben wirkt und diesen in Richtung der Druckkammer zu verlagern sucht. Auf diese Weise wird der Kolben gemeinsam mit dem Eingriffselement bei einer Entlüftung der Druckkammer aus dem Bremsteil heraus bewegt, wodurch besonders bevorzugt die Bremsmittel des Nutzfahrzeuges außer Eingriff gelangen.

In einer besonders bevorzugten Ausführungsform ist das erste Rückstellelement in jedem Betriebszustand des Bremssystems vorgespannt. Insbesondere bevorzugt ist das erste Rückstellelement auch dann vorgespannt, wenn der Kolben in seiner am weitesten von dem Bremsteil des Bremssystems beabstandeten Position angeordnet ist. Auf diese Weise lässt sich in jedem Betriebszustand des Bremssystems eine akkurate Aufhebung der Bremswirkung und somit freie Fahrt des Nutzfahrzeuges gewährleisten. Die Vorspannung des ersten Rückstellelements ist dabei jedoch derart ausgelegt, dass es einem Monteur des Bremssystems ohne Weiteres möglich ist, mit händischer Kraft den Kolben in seine am weitesten von dem Bremsteil angeordnete Position bringen zu können, um anschließend beispielsweise den Anschlag, an den der Kolben anschlägt, im Gehäuse anzuordnen.

Weiterhin bevorzugt weist das Gehäuse einen Stützabschnitt auf, gegen welchen sich das erste Rückstellelement längs der Betätigungsachse abstützt und/oder welcher das Eingriffselement gegen Verlagerung quer zur Betätigungsachse sichert. Mit Vorteil ist der Stützabschnitt des Gehäuses im Bereich zwischen dem Bremsteil und dem Betätigungsteil des Gehäuses angeordnet. Der Stützabschnitt dient dabei zum einen der Abstützung des ersten Rückstellelements, um dieses in Richtung des Kolbens vorzuspannen. Alternativ oder zusätzlich bevorzugt dient der Stützabschnitt auch der Abstützung des Eingriffselements gegen Verlagerung quer zur Betätigungsachse, wobei gleichzeitig eine Verlagerung des Eingriffselements längs der Betätigungsachse gewährleistet ist. Der Stützabschnitt kann dabei vorzugsweise ein, in eine entsprechende Eingriffsgeometrie des Gehäuses eingebrachtes, beispielsweise eingeschraubtes, Element und vorzugsweise ringförmig ausgebildet sein. Alternativ bevorzugt ist der Stützabschnitt einstückig mit dem Gehäuse ausgebildet.

Besonders bevorzugt umfasst das Bremssystem weiterhin eine Feststelleinheit, welche an die Druckkammer angrenzend angeordnet ist, wobei die Feststelleinheit ein zweites Rückstellelement und einen Feststellspeicher aufweist, welche durch einen Feststellkolben fluiddicht voneinander getrennt sind, wobei der Feststellkolben ausgelegt ist, eine Kraft mittelbar oder unmittelbar auf das Eingriffselement zu übertragen. Die Feststelleinheit erfüllt vorzugsweise die Funktion einer aus dem Stand der Technik bekannten Feststellbremse, wobei insbesondere bevorzugt bei einer Entlüftung, das heißt bei einer Reduzierung des Betriebsdruckes in dem Feststellspeicher, ein zweites Rückstellelement vorgesehen ist, welches über den Feststellkolben eine Kraft mittelbar oder unmittelbar auf das Eingriffselement überträgt, um dieses in seine Position zu verlagern, in welchen es die Bremsmittel des Nutzfahrzeuges in ihre bremsende Stellung bringt. Das zweite Rückstellelement weist dabei mit Vorteil eine wesentlich höhere Federkraft bzw. -konstante als das erste Rückstellelement auf, um dessen, dem zweiten Rückstellelement entgegenwirkenden Kraft zu übertreffen und bei einer vollständigen Entlüftung des gesamten Bremssystems eine Bremsung des Nutzfahrzeuges zu verursachen. Mit Vorteil kann dabei bei einem Systemausfall des Drucksystemes des Nutzfahrzeuges eine Bremsung durch das Bremssystem eingeleitet werden, da die Kraft des zweiten Rückstellelements ausreicht, um die Kraft des ersten Rückstellelements zu überwinden und trotzdem eine ausreichend hohe Restkraft zur Verlagerung des Eingriffselements in eine bremsende Stellung zu erreichen. Besonders bevorzugt ist es dabei, dass auch die Feststelleinheit bereichsweise innerhalb des Gehäuses angeordnet ist, wobei entsprechende Trenngeometrien zwischen dem Betätigungsteil und der Feststelleinheit in das Gehäuse einbringbar und an diesem festlegbar sind. Es lässt sich auf diese Weise eine weitere Steigerung der Kompaktheit des Bremssystems erreichen. Weiterhin kann die Fehleranfälligkeit des Bremssystems reduziert werden, da zwischen der Feststelleinheit und dem Betätigungsteil des Bremssystems auf weitere Schnittstellen verzichtet werden kann, welche insbesondere gegen Leckage und bei Vibrationen auch gegen gegenseitige Beschädigung anfällig sein können.

Weiterhin bevorzugt weist die Feststelleinheit ein Feststellgehäuse auf, welches fluiddicht mit dem Gehäuse verbindbar ist. Alternativ zur einstückigen Ausbildung des Gehäuses der Feststelleinheit und des Betätigungsteils kann die Feststelleinheit auch ein separat ausgebildetes Feststellgehäuse aufweisen. Dies dient insbesondere der Erleichterung der Wartung des Bremssystems, da die Feststelleinheit von dem Gehäuse abgenommen werden kann, um einzelne Wartungsschritte vorzunehmen. Zur fluiddichten Verbindung des Feststellgehäuses mit dem Gehäuse ist es bevorzugt, dass Dichtungselemente und entsprechende Flanschgeometrien sowohl am Feststellgehäuse als auch am Gehäuse vorgesehen sind.

In einer ersten Ausführungsform ist es bevorzugt, dass die Druckkammer durch eine Wand des Feststellgehäuses begrenzt ist. Mit Vorteil kann dabei durch Demontage des Feststellgehäuses vom Gehäuse direkt Zugang zur Druckkammer geschaffen werden. Die Wartungsarbeiten lassen sich auf diese Weise drastisch erleichtern.

In einer alternativ bevorzugten Ausführungsform ist der Feststellspeicher durch eine Wand des Gehäuses begrenzt. Bei dieser alternativ bevorzugten Ausführungsform kann das Gehäuse mit Vorteil für höhere Drücke in der Druckkammer ausgelegt werden, wobei in der Feststellkammer vorzugsweise geringere Drücke erwartet werden und daher die Schnittstelle zwischen Gehäuse und Feststellgehäuse vorzugsweise in den Bereich der Feststellkammer gelegt ist. Mit Vorteil befindet sich dabei ein Druckluftzufuhrstutzen, welcher in den Feststellspeicher mündet, im Bereich der Wand des Gehäuses, wobei das Feststellgehäuse von dem Gehäuse demontiert werden kann ohne gleichzeitig die Druckluftleitungen demontieren zu müssen. Es lässt sich auf diese Weise signifikant der Montageaufwand des Bremssystems reduzieren. Die Wand des Gehäuses, welche den Feststellspeicher begrenzt, ist dabei vorzugsweise in einem an dem Gehäuse festgelegten Deckelelement angeordnet.

Weitere Vorteile und Merkmale der vorliegenden Erfindung ergeben sich aus der nachfolgenden Beschreibung mit Bezug auf die beigefügten Figuren. Es versteht sich dabei, dass einzelne, in nur einer der Ausführungsformen gezeigte Merkmale, auch in anderen Ausführungsformen des Bremssystems zum Einsatz kommen sollen, sofern dies nicht explizit ausgeschlossen wurde oder sich aufgrund der Auslegung des Bremssystems verbietet. Es zeigen:
- Fig. 1: eine Schnittansicht einer ersten bevorzugten Ausführungsform des erfindungsgemäßen Bremssystems,
- Fig. 2: Schnittansicht einer zweiten Ausführungsform des erfindungsgemäßen Bremssystems, und
- Fig. 3: eine Schnittansicht der Ausführungsform aus Fig. 2.

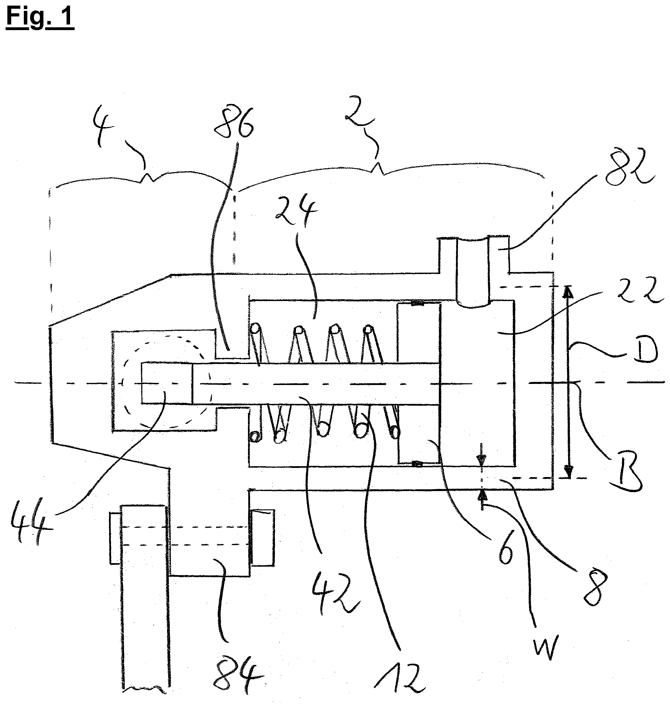

Fig. 1 zeigt schematisch eine Schnittansicht eines bevorzugten Bremssystems. Das Bremssystem weist dabei eine Betätigungsteil 2 und einen Bremsteil 4 auf, wobei sowohl der Betätigungsteil 2 als auch der Bremsteil 4 vorzugsweise vollständig innerhalb eines Gehäuses 8 angeordnet sind. Der Betätigungsteil 2 umfasst vorteilhafterweise eine Druckkammer 22 und einen Rückstellabschnitt 24, welche durch einen Kolben 6 fluiddicht voneinander getrennt sind. Im Rückstellabschnitt 24 ist ein erstes Rückstellelement 12 angeordnet, welches eine Kraft auf den Kolben 6 ausübt, um diesen in Richtung der Druckkammer 22 zu verlagern. Der Kolben 6 ist mit Vorteil fest mit einem Eingriffselement 42 verbunden, so dass eine Verlagerung des Kolbens 6 längs der Betätigungsachse B immer zu einer Verlagerung des Eingriffselements 42 gemeinsam mit dem Kolben 6 führt. Besonders bevorzugt ist der Kolben 6 dabei einstückig mit dem Eingriffselement 42 ausgebildet. Das Eingriffselement 42 weist an seinem in den Bremsteil 4 hineinragenden Bereich einen Kraftabschnitt 44 auf. Der Kraftabschnitt 44 ist dabei bevorzugt eine Keilgeometrie, welche zur Betätigung der Spreizkeileinheit einer Spreizkeiltrommelbremse ausgelegt ist. Zwischen dem Betätigungsteil 2 und dem Bremsteil 4 weist das Gehäuse 8 vorteilhafterweise einen Stützabschnitt 86 auf, welcher zum einen der Abstützung des ersten Rückstellelements 12 dient und alternativ oder zusätzlich bevorzugt auch eine Verlagerung des Eingriffselements 42 quer zur Betätigungsachse B verhindert. Weiterhin bevorzugt weist das Gehäuse 8 einen Flanschabschnitt 84 auf, welcher, wie in der Figur schematisch dargestellt, zur Festlegung an dem angedeuteten Fahrwerk eines Nutzfahrzeuges ausgelegt ist. Es ist dabei besonders bevorzugt, dass der Flanschabschnitt 84 einstückig mit dem Gehäuse 8 ausgebildet ist, um besonders bevorzugt hohe Kräfte aushalten zu können und die Montage des Bremssystems zu vereinfachen. Weiterhin bevorzugt weist das Gehäuse 8 einen Fluidstutzen 82 auf, welcher dafür vorgesehen ist, eine Druckleitung an das Gehäuse 8 anzuschließen und ein Fluid, wie beispielsweise Druckluft, in die Druckkammer 22 einzuleiten. In der Figur nicht dargestellt ist, dass bevorzugt auf der rechten Seite der Druckkammer 22 ein Deckelelement 14 an das Gehäuse 8 anbringbar ist, welches die in der Figur nur schematisch dargestellte rechte Wand der Druckkammer 22 ersetzt und somit die Begrenzung der Druckkammer 22 auf der dem Kolben 6 abgewandten Seite gewährleistet. Weiterhin ist in der Figur die minimale Wandstärke w des Gehäuses dargestellt. Die minimale Wandstärke w wird dabei besonders bevorzugt im Bereich des Betätigungsteils 2 gemessen, insbesondere bevorzugt ist die minimale Wandstärke w im Bereich der Druckkammer 22 vorgesehen. Weiterhin ist der mittlere Durchmesser D des Gehäuses dargestellt, welcher bei einem bevorzugt zylindrisch ausgebildeten Gehäuse 8 vorzugsweise jeweils in der Mitte der Gehäusewand gemessen ist.

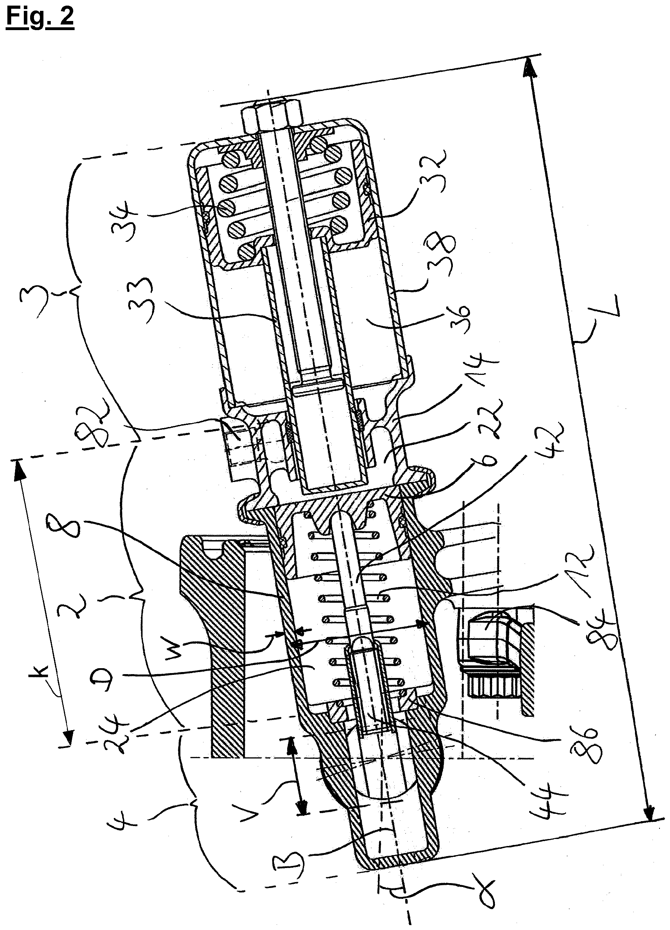

Fig. 2 zeigt eine weitere bevorzugte Ausführungsform des erfindungsgemäßen Bremssystems, wobei neben dem Bremsteil 4 und dem Betätigungsteil 2 auch eine Feststelleinheit 3 vorgesehen ist, welche an die Druckkammer 22 grenzt. Bei der in Fig. 2 dargestellten bevorzugten Ausführungsform ist dabei ein Deckelelement 14 vorgesehen, welches an das Gehäuse 8 mit einer formschlüssigen Verbindung festgelegt ist. Das Deckelelement 14 bildet dabei vorzugsweise einen Teil des Gehäuses 8. Weiterhin bevorzugt weist das Deckelelement 14 dabei einen Fluidstutzen 82 für die Zufuhr von Druckfluid, wie beispielsweise Druckluft, in die Druckkammer 22 auf. Weiterhin bevorzugt ist am Gehäuse auch ein nicht gezeigter Zufuhrstutzen zur Zufuhr von Druckluft in den Feststellspeicher 36 vorgesehen. Der Bremsteil 4 und der Betätigungsteil 2 der in Fig. 2 gezeigten Ausführungsform weisen dabei im Wesentlichen dieselben Merkmale auf, wie bei der in Fig. 1 dargestellten Ausführungsform. Die Feststelleinheit 3 umfasst vorzugsweise einen Feststellkolben 32, welcher längs der Betätigungsachse B innerhalb eines Feststellgehäuses 38 verlagerbar ist und einen Bereich, in dem zweites Rückstellelement 34 angeordnet ist und den Feststellspeicher 36 fluiddicht voneinander trennt. Der Feststellkolben 32 weist darüber hinaus ein Feststellmittel 33 auf, welches dafür ausgelegt ist, eine von dem zweiten Rückstellelement 34 aufgebrachte Kraft auf den Kolben 6 zu übertragen. In Fig. 2 ist dabei ein Betriebszustand des Bremssystems dargestellt, bei welchem das Feststellelement 33 keine Kraft auf den Kolben 6 überträgt. Dies liegt darin begründet, dass im Feststellspeicher 36 ein Fluid mit einem Druck eingebracht ist, welcher die Rückstellkraft des zweiten Rückstellelements 34 überwindet und somit dafür sorgt, dass der Feststellkolben 32 nach in der Figur rechts verlagert wird und sich somit auch das Feststellelement 33 von dem Kolben 6 wegbewegt und keine Kraft auf diesen überträgt. Weiterhin ist in der Figur die Gesamtbaulänge L des Bremssystems dargestellt, welche im Rahmen der vorliegenden Erfindung besonders bevorzugt sehr gering ist. Das Betätigungselement 42 legt dabei im normalen Betrieb des Bremssystems einen maximalen Betätigungsweg v zurück, welcher in einem bevorzugten Verhältnis von 0,05 bis 0,6 zur Gesamterstreckung L des Bremssystems längs der Betätigungsachse B steht. Diese Maß ist ein Ausdruck für die besonders bevorzugte, kompakte Bauweise des Bremssystems. In Fig. 2 weiterhin dargestellt ist ein bevorzugter Schwenkwinkel α, um den, relativ zur Horizontalen verschwenkt, die Betätigungsachse B des Bremssystems vorzugsweise verläuft. Durch die kompakte Bauweise des Bremssystems und eine daraus resultierende geringe Gefahr, mit weiteren Komponenten des Nutzfahrzeugfahrwerkes in Berührung zu geraten, kann der Schwenkwinkel α möglichst gering gehalten werden. Es ist dabei bevorzugt, dass der Schwenkwinkel α im Bereich von -5° bis 12°, vorzugsweise 0° bis 10° relativ zur Horizontalen liegt. Weiterhin bevorzugt und bei einer besonders bevorzugten kompakten Bauweise, wie in Fig. 2 dargestellt, kann der Schwenkwinkel α im Bereich von 5° bis 10° liegen. Mit Vorteil steht der maximale Betätigungsweg v in einem Verhältnis von 0,28 bis 0,8, vorzugsweise 0,4 bis 0,7 und besonders bevorzugt von ca. 0,6 zur Erstreckung k des Betätigungsteils 2 längs der Betätigungsachse B.

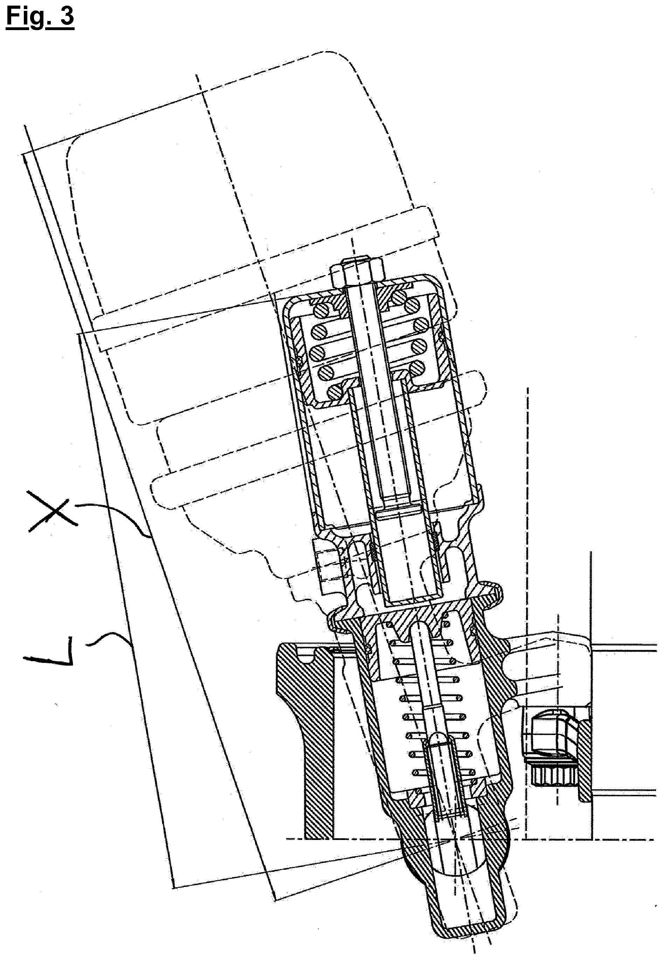

Fig. 3 zeigt die Ausführungsform aus Fig. 2, wobei gestrichelt ein herkömmliches Bremssystem dargestellt ist. Im Rahmen der vorliegenden Erfindung wurde eine Lösung gefunden mit der der Bauraumbedarf eines Bremssystems drastisch reduziert werden kann, wobei die Anforderungen an das Bremssystem, insbesondere bezüglich der aufzubringenden Kraft, als auch bezüglich des Betätigungsweges v gleich bleiben. Fig. 3 verdeutlicht dabei, wie stark die Bauraumeinsparung durch ein erfindungsgemäßes Bremssystem ausfällt. Die Gesamterstreckung L der bevorzugten Ausführungsform des erfindungsgemäßen Bramssystems ist dabei um ca. ein Drittel geringer als die Gesamtbaulänge X eines herkömmlichen Bremssystems. Zusätzlich, zum Teil als Folge der geringen Gesamterstreckung L, kann das erfindungsgemäße Bremssystem mit einem geringeren Schwenkwinkel α zwischen Axialrichtung des Fahrwerks und der Betätigungsachse B verschwenkt im Fahrwerk angeordnet werden als das herkömmliche Bremssystem. Hierdurch wird auch die maximale Erstreckung des Bremssystems quer zur Axialrichtung des Fahrwerkes reduziert.

### Bezugszeichen:

- 2: - Betätigungsteil
- 3: - Feststellteil
- 4: - Bremsteil
- 6: - Kolben
- 8: - Gehäuse
- 12: - erstes Rückstellelement
- 14: - Deckelelement
- 22: - Druckkammer
- 24: - Rückstellabschnitt
- 32: - Feststellkolben
- 33: - Feststellmittel
- 34: - zweites Rückstellelement
- 36: - Feststellspeicher
- 38: - Feststellgehäuse
- 42: - Eingriffselement
- 44: - Kraftabschnitt
- 82: - Fluidstutzen
- 84: - Flanschabschnitt
- 86: - Stützabschnitt
- α: - Winkel
- B: - Betätigungsachse
- D: - mittlerer Durchmesser
- k: - Erstreckung Betätigungsteil
- L: - Gesamterstreckung
- v: - Betätigungsweg
- w: - Wandstärke
- X: - Gesamtbaulänge

## Patentansprüche

1. Bremssystem umfassend einen Betätigungsteil (2) und einen Bremsteil (4), wobei der Betätigungsteil (2) eine Druckkammer (22) und einen Rückstellabschnitt (24) aufweist,
wobei die Druckkammer (22) und der Rückstellabschnitt (24) durch einen Kolben (6) fluiddicht voneinander getrennt sind,
wobei der Kolben (6) an einem Eingriffselement (42) derart festlegbar ist, dass eine Verlagerung des Kolbens (6) eine Verlagerung des Eingriffselements (42) bewirkt,
wobei das Eingriffselement (42) in den Bremsteil (4) hineinragt und im Bremsteil (4) einen Kraftabschnitt (44) aufweist, welcher ausgelegt ist, eine Kraft auf ein Bremsmittel zu übertragen,
wobei der Bremsteil (4) und der überwiegende Teil des Betätigungsteils (2) in einem Gehäuse (8) angeordnet sind, **dadurch gekennzeichnet dass** das Gehäuse (8) einstückig ausgebildet ist, und das Gehäuse (8) im Bereich des Bremsteils (4) als Spreizkeileinheit ausgebildet ist.

2. Bremssystem nach Anspruch 1,
wobei das Eingriffselement (42) entlang einer Betätigungsachse (B) um einen maximale Betätigungsweg (v) verlagerbar ist,
wobei der maximale Betätigungsweg (v) zu der Gesamterstreckung (L) des Bremssystems längs der Betätigungsachse (B) in einem Verhältnis von 0,05 bis 0,6, vorzugsweise von 0,06 bis 0,3 und besonders bevorzugt von 0,075 bis 0,13 steht.

3. Bremssystem nach einem der vorhergehenden Ansprüche,
wobei der Betätigungsteil (2) für einen maximalen Betriebsdruck in der Druckkammer (22) von zumindest 15 bar, vorzugsweise von zumindest 17 bar ausgelegt ist.

4. Bremssystem nach einem der vorhergehenden Ansprüche,
wobei das Gehäuse (8) zylindrisch ausgebildet ist und einen mittleren Durchmesser (D) aufweist,
wobei das Gehäuse (8) im Bereich der Druckkammer (22) eine minimale Wandstärke (w) aufweist,
wobei die minimale Wandstärke (w) zum mittleren Durchmesser (D) in einem Verhältnis von 0,01 bis 0,2, vorzugsweise von 0,03 bis 0,1 und besonders bevorzugt von ca. 0,06 bis 0,1 steht.

5. Bremssystem nach einem der vorhergehenden Ansprüche,
wobei das Eingriffselement (42) und der Kolben (6) vollständig innerhalb des Gehäuses (8) angeordnet sind.

6. Bremssystem nach einem der vorhergehenden Ansprüche,
wobei das Gehäuse (8) einen Fluidstutzen (82) aufweist, welcher an der Außenseite des Gehäuses (8) zum Anschluss einer Druckleitung ausgelegt ist und an der Innenseite des Gehäuses (8) in die Druckkammer (22) mündet.

7. Bremssystem nach einem der vorhergehenden Ansprüche,
wobei das Gehäuse (8) einen Flanschabschnitt (84) aufweist, welcher zur Festlegung des Gehäuses (8) an einem Fahrwerkselement eines Nutzfahrzeugs ausgelegt ist.

8. Bremssystem nach einem der vorhergehenden Ansprüche,
wobei im Rückstellabschnitt (24) ein erstes Rückstellelement (12) angeordnet ist, welches eine Kraft entlang einer Betätigungsachse (B) in Richtung der Druckkammer (22) auf den Kolben (6) ausübt.

9. Bremssystem nach Anspruch 8,
wobei das erste Rückstellelement (12) in jedem Betriebszustand des Bremssystems vorgespannt ist.

10. Bremssystem nach einem der Ansprüche 8 oder 9,
wobei das Gehäuse (8) einen Stützabschnitt (86) aufweist, gegen welchen sich das erste Rückstellelement (12) längs der Betätigungsachse (B) abstützt und/oder welcher das Eingriffselement (42) gegen Verlagerung quer zur Betätigungsachse (B) sichert.

11. Bremssystem nach einem der vorhergehenden Ansprüche,
umfassend eine Feststelleinheit (3) welche an die Druckkammer (22) angrenzend angeordnet ist,
wobei die Feststelleinheit (3) ein zweites Rückstellelement (34) und einen Feststellspeicher (36) aufweist, welche durch einen Feststellkolben (32) fluiddicht voneinander getrennt sind,
wobei der Feststellkolben (32) ausgelegt ist, eine Kraft mittelbar oder unmittelbar auf das Eingriffselement (42) zu übertragen.

12. Bremssystem nach Anspruch 11,
wobei die Feststelleinheit (3) ein Feststellgehäuse (38) aufweist, welches fluiddicht mit dem Gehäuse (8) verbindbar ist.

13. Bremssystem nach einem der Ansprüche 11 oder 12,
wobei die Druckkammer (22) durch eine Wand des Feststellgehäuses (38) begrenzt ist.

14. Bremssystem nach einem der Ansprüche 11 oder 12,
wobei der Feststellspeicher (36) durch eine Wand des Gehäuses (8) begrenzt ist.

## Claims

1. A brake system comprising an actuating part (2) and a brake part (4),
wherein the actuating part (2) having a pressure chamber (22) and a restoring section (24),
wherein the pressure chamber (22) and the restoring section (24) being separated from one another in a fluid-tight manner by way of a piston (6), wherein it being possible for the piston (6) to be fixed on an engagement element (42) in such a way that a movement of the piston (6) brings about a movement of the engagement element (42),
wherein the engagement element (42) protruding into the brake part (4) and having, in the brake part (4), a force section (44) which is designed to transmit a force to a brake means,
wherein the brake part (4) and the predominant part of the actuating part (2) being arranged in a housing (8), **characterized in that**,
the housing (8) being configured in one piece, and the housing (8) being configured as an expansion wedge unit in the region of the brake part (4).

2. The brake system as claimed in claim 1, it being possible for the engagement element (42) to be moved along an actuating axis (B) by a maximum actuating travel (v),
wherein the maximum actuating travel (v) being in a ratio of from 0.05 to 0.6, preferably of from 0.06 to 0.3 and particularly preferably of from 0.075 to 0.13 to the overall extent (L) of the brake system along the actuating axis (B).

3. The brake system as claimed in either of the preceding claims, the actuating part (2) being designed for a maximum operating pressure in the pressure chamber (22) of at least 15 bar, preferably of at least 17 bar.

4. The brake system as claimed in one of the preceding claims, the housing (8) being of cylindrical configuration and having a mean diameter (D),
wherein the housing (8) having a minimum wall thickness (w) in the region of the pressure chamber (22),
wherein the minimum wall thickness (w) being in a ratio of from 0.01 to 0.2, preferably of from 0.03 to 0.1 and particularly preferably of from approximately 0.06 to 0.1 to the mean diameter (D).

5. The brake system as claimed in one of the preceding claims, the engagement element (42) and the piston (6) being arranged completely within the housing (8).

6. The brake system as claimed in one of the preceding claims, the housing (8) having a fluid nozzle (82) which is configured on the outer side of the housing (8) for the connection of a pressure line and opens on the inner side of the housing (8) into the pressure chamber (22).

7. The brake system as claimed in one of the preceding claims, wherein the housing (8) having a flange section (84) which is designed for fixing the housing (8) on a chassis element of a commercial vehicle.

8. The brake system as claimed in one of the preceding claims, wherein a first restoring element (12) being arranged in the restoring section (24), which first restoring element (12) exerts a force on the piston (6) along an actuating axis (B) in the direction of the pressure chamber (22).

9. The brake system as claimed in claim 8, wherein the first restoring element (12) being prestressed in every operating state of the brake system.

10. The brake system as claimed in either of claims 8 and 9, wherein the housing (8) having a supporting section (86), against which the first restoring element (12) is supported along the actuating axis (B) and/or which secures the engagement element (42) against movement transversely with respect to the actuating axis (B).

11. The brake system as claimed in one of the preceding claims, comprising a fixing unit (3) which is arranged so as to adjoin the pressure chamber (22), wherein the fixing unit (3) having a second restoring element (34) and a fixing brake accumulator (36) which are separated from one another in a fluid-tight manner by way of a fixing brake piston (32),
wherein the fixing brake piston (32) being designed to transmit a force indirectly or directly to the engagement element (42).

12. The brake system as claimed in claim 11, wherein the fixing brake unit (3) having a fixing brake housing (38) which can be connected in a fluid-tight manner to the housing (8).

13. The brake system as claimed in either of claims 11 and 12, the pressure chamber (22) being delimited by a wall of the fixing brake housing (38).

14. The brake system as claimed in either of claims 11 and 12, the fixing brake accumulator (36) being delimited by a wall of the housing (8).

## Revendications

1. Système de frein, comportant une partie d'actionnement (2) et une partie de freinage (4), la partie d'actionnement (2) comprenant une chambre sous pression (22) et une portion de rappel (24),
dans lequel
la chambre sous pression (22) et la portion de rappel (24) sont séparées l'une de l'autre de façon étanche aux fluides par un piston (6),
le piston (6) peut être immobilisé sur un élément d'engagement (42) de telle sorte qu'un déplacement du piston (6) provoque un déplacement de l'élément d'engagement (42),
l'élément d'engagement (42) pénètre dans la partie de freinage (4) et comprend une portion d'application de force (44) dans la partie de freinage (4), qui est conçue pour transmettre une force sur un fluide de freinage,
la partie de freinage (4) et la majeure partie de la partie d'actionnement (2) sont agencées dans un boîtier (8),
**caractérisé en ce que**
le boîtier (8) est réalisé d'un seul tenant et le boîtier (8) est réalisé sous forme d'unité à coin d'écartement dans la zone de la partie de freinage (4).

2. Système de frein selon la revendication 1,
dans lequel
l'élément d'engagement (42) est mobile d'un trajet d'actionnement maximal (v) le long d'un axe d'actionnement (B),
le trajet d'actionnement maximal (v) par rapport à l'extension totale (L) du système de frein le long de l'axe d'actionnement (B) est dans un rapport de 0,05 à 0,6, de préférence de 0,06 à 0,3 et de manière particulièrement préférée de 0,075 à 0,13.

3. Système de frein selon l'une des revendications précédentes,
dans lequel
la partie d'actionnement (2) est conçue pour une pression de fonctionnement maximale dans la chambre sous pression (22) d'au moins 15 bars, de préférence d'au moins 17 bars.

4. Système de frein selon l'une des revendications précédentes,
dans lequel
le boîtier (8) est réalisé cylindrique et présente un diamètre moyen (D),
le boîtier (8) présente une épaisseur de paroi minimale (w) dans la zone de la chambre sous pression (22),
l'épaisseur de paroi minimale (w) par rapport au diamètre moyen (D) est dans un rapport de 0,01 à 0,2, de préférence de 0,03 à 0,1 et de manière particulièrement préférée d'environ 0,06 à 0,1.

5. Système de frein selon l'une des revendications précédentes,
dans lequel
l'élément d'engagement (42) et le piston (6) sont agencés complètement à l'intérieur du boîtier (8).

6. Système de frein selon l'une des revendications précédentes,
dans lequel
le boîtier (8) comprend un manchon à fluide (82) qui est conçu pour raccorder une conduite sous pression sur le côté extérieur du boîtier (8) et qui débouche dans la chambre sous pression (22) sur le côté intérieur du boîtier (8).

7. Système de frein selon l'une des revendications précédentes,
dans lequel
le boîtier (8) présente une portion formant bride (84) qui est conçue pour immobiliser le boîtier (8) sur un élément du train de roulement d'un véhicule utilitaire.

8. Système de frein selon l'une des revendications précédentes,
dans lequel
un premier élément de rappel (12) est agencé dans la portion de rappel (24), élément qui exerce une force sur le piston (6) le long d'un axe d'actionnement (B) en direction de la chambre sous pression (22).

9. Système de frein selon la revendication 8,
dans lequel
le premier élément de rappel (12) est précontraint dans chaque état de fonctionnement du système de frein.

10. Système de frein selon l'une des revendications 8 ou 9,
dans lequel
le boîtier (8) présente une portion d'appui (86) contre laquelle s'appuie le premier élément de rappel (12) le long de l'axe d'actionnement (B) et/ou qui bloque l'élément d'engagement (42) à l'encontre d'un déplacement transversal à l'axe d'actionnement (B).

11. Système de frein selon l'une des revendications précédentes, comprenant une unité d'immobilisation (3) qui est agencée de façon adjacente à la chambre sous pression (22),
dans lequel
l'unité d'immobilisation (3) présente un second élément de rappel (34) et un accumulateur d'immobilisation (36) qui sont séparés l'un de l'autre de façon étanche aux fluides par un piston d'immobilisation (32),
le piston d'immobilisation (32) est conçu pour transmettre une force directement ou indirectement à l'élément d'engagement (42).

12. Système de frein selon la revendication 11,
dans lequel
l'unité d'immobilisation (3) présente un boîtier d'immobilisation (38) qui peut être relié de façon étanche aux fluides au boîtier (8).

13. Système de frein selon l'une des revendications 11 ou 12,
dans lequel
la chambre sous pression (22) est délimitée par une paroi du boîtier d'immobilisation (38).

14. Système de frein selon l'une des revendications 11 ou 12,
dans lequel
l'accumulateur d'immobilisation (36) est délimité par une paroi du boîtier (8).
